# EUROPÄISCHE PATENTSCHRIFT

(11) **EP 2 986 460 B1**
(45) Veröffentlichungstag und Bekanntmachung des Hinweises auf die Patenterteilung: **29.11.2017**
(21) Anmeldenummer: 14710912.8
(22) Anmeldetag: 19.03.2014
(51) Int. Cl.: B60H 1/00, B60H 1/14

(54) **WÄRMEPUMPENANLAGE FÜR EIN FAHRZEUG UND VERFAHREN ZUM BETRIEB EINER ENTSPRECHENDEN WÄRMEPUMPENANLAGE**
HEAT PUMP SYSTEM FOR A VEHICLE, AND METHOD FOR OPERATING A CORRESPONDING HEAT PUMP SYSTEM
INSTALLATION DE POMPE À CHALEUR POUR VÉHICULE ET PROCÉDÉ DE FONCTIONNEMENT D'UNE INSTALLATION DE POMPE À CHALEUR CORRESPONDANTE

(30) Priorität: 15.04.2013 DE 102013206634
(43) Veröffentlichungstag der Anmeldung: 24.02.2016
(73) Patentinhaber: Bayerische Motoren Werke Aktiengesellschaft, 80809 München (DE)
(72) Erfinder: HORN, Oliver, 81475 München (DE); HERBOLZHEIMER, Robert, 82194 Groebenzell (DE); SATZGER, Peter, 86899 Landsberg am Lech (DE)
(86) Internationale Anmeldenummer: PCT/EP2014/055497
(87) Internationale Veröffentlichungsnummer: WO 2014/170082

(56) Entgegenhaltungen:
- WO-A1-2010/139582
- JP-A- 2006 321 389

## Beschreibung

Die Erfindung betrifft eine Wärmepumpenanlage zur Klimatisierung eines Fahrzeuges, insbesondere eines Elektro- oder Hybridfahrzeuges, mit einem Heizbetrieb zur Erwärmung eines Fahrgastraumes umfassend einen Kühlkreislauf und einen Kältekreislauf mit einem Kondensator, wobei der Kühlkreislauf und der Kältekreislauf zwecks Wärmeübertragung in den Kühlkreislauf mittels des Kondensators koppelbar sind. Zudem betrifft die Erfindung ein Verfahren zum Betrieb einer entsprechenden Wärmepumpenanlage.

Eine derartige Wärmepumpenanlage und ein derartiges Verfahren gemäß Oberbegriff des Anspruchs 1 bzw. 11 sind beispielsweise aus der WO 2010/139582 A1 zu entnehmen.

Bei konventionellen Fahrzeugen mit einem Verbrennungsmotor als einzige Antriebseinheit wird zur bedarfsweisen Erwärmung des Fahrgastraumes die vom Verbrennungsmotor in einen Kühlkreislauf eingekoppelte Abwärme genutzt. Im Falle von Hybridfahrzeugen oder Elektrofahrzeugen jedoch wird in manchen Betriebssituationen durch die Antriebseinheiten nicht ausreichend Abwärme generiert, um bei Bedarf den Fahrgastraum in gewünschtem Umfang erwärmen zu können.

Eine mögliche Lösung für dieses Problem ist aus der WO 2010/139582 A1 zu entnehmen. Darin ist ein Wärmemanagementsystem mit einer Wärmepumpenanlage für ein Elektrofahrzeug beschrieben, wobei bei diesem System als wesentliches Element ein Wärmespeicher vorgesehen ist, der zum Beispiel beim Aufladen des Hochvoltspeichers des Elektrofahrzeuges mit aufgeladen wird, so dass dieser dann im Bedarfsfall als Wärmequelle für eine Erwärmung des Fahrgast-Innenraums zur Verfügung steht. Die Wärmepumpenanlage weist dabei einen Kältemittelkreislauf auf, welcher mittels eines Kondensators zur Abgabe von Wärme mit einem Kühlkreislauf für elektrische Komponenten des Fahrzeugs gekoppelt ist. Umgekehrt ist zur Übertragung von (Ab-) Wärme der elektrischen Komponenten aus dem Kühlkreislauf in den Kältemittelkreislauf ein Verdampfer vorgesehen, über den die beiden Kreisläufe gekoppelt sind. Zusätzlich ist in den Kältekreislauf ein Klimagerät-Verdampfer geschaltet, welcher bei Bedarf zur Kühlung der Innenraumluft zugeschaltet wird. Wesentlich ist hierbei jedoch die Verwendung eines Wärmespeichers. Für einen solchen Wärmespeicher wird allerdings zusätzlicher Bauraum im Elektrofahrzeug benötigt und außerdem erhöht einen solchen Wärmespeicher das Gewicht des Elektrofahrzeuges

Um eine möglichst effiziente Erwärmung des Fahrgast-Innenraums bei tiefen Außentemperaturen zu ermöglichen, ist zudem auch der Einsatz von Wärmepumpen bekannt, mit deren Hilfe Wärme aus der Umgebung nach dem Wärmepumpenprinzip auf ein höheres Temperaturniveau angehoben und dann an den Innenraum weitergegeben wird.

In der WO 2011/029538 A1 ist dabei ergänzend zu der Ausnutzung der Umgebungswärme auch die Ausnutzung der Abwärme beispielsweise einer Batterie zu entnehmen. Die Abwärme wird dabei einem Verdampfer eines Kältekreislaufs der Wärmepumpe zugeführt, über den das Kältemittel des Kältekreislaufs erwärmt wird. Zur ergänzenden Ausnutzung der Umgebungswärme wird ein kühlerseitiger Wärmetauscher ebenfalls als Verdampfer für den Kältekreislauf eingesetzt. In den Kältekreislauf selbst ist weiterhin ein herkömmlicher Verdampfer eines Klimageräts, also ein Klimagerät-Verdampfer, zur Innenraum-Klimatisierung eingebunden. In einem Heizmodus zur Erwärmung des Innenraums bei niedrigen Außentemperaturen wird dieser normale Verdampfer nicht aktiviert, also nicht vom Kältemittel durchströmt. Die Wärme wird vielmehr wahlweise über den der Batterie zugeordneten Verdampfer oder den kühlerseitigen Umgebungswärme-Verdampfer aufgenommen und über einen Kondensator an die Luft zur Innenraum-Beheizung abgegeben.

In der DE 101 23 830 A1 ist ebenfalls eine Wärmepumpe beschrieben, mit deren Hilfe mittels eines Verdampfers aus der Umgebung Wärme aufgenommen und an den Fahrgast-Innenraum auf höherem Temperaturniveau abgegeben wird. Hierzu ist ein als Kondensator des Kältekreislaufs ausgebildeter Koppelwärmetauscher angeordnet, welcher die im Wärmepumpenbetrieb erzeugte Wärme in den Hochtemperatur-Kühlkreislauf einkoppelt. Dieser wiederum weist einen Heizwärmetauscher auf, der zur Erwärmung des Innenraums in einem Belüftungskanal angeordnet ist.

Bei einer Wärmepumpe wird allgemein ein Kältemittel im Kreislauf geführt. Dabei wird es zwischen einem Verdichter, einem Kondensator, einem Drosselorgan, einem Verdampfer und dann wieder zum Verdichter geführt. Im Verdichter wird das gasförmige Kältemittel auf ein höheres Druck- und Temperaturniveau gebracht. Das gasförmige Kältemittel kondensiert im Kondensator unter Wärmeabgabe, wobei das Temperaturniveau abnimmt. Durch das Drosselorgan wird das Kältemittel wieder auf ein niedrigeres Druckniveau gebracht und kühlt dabei deutlich ab, so dass es wieder als kaltes gasförmiges Fluid dem Verdampfer zugeführt wird. Am Verdampfer nimmt das Kältemittel Wärme durch Wärmetausch mit einer Wärmequelle, beispielsweise Umgebungsluft etc., auf und wird auf ein höheres Temperaturniveau geführt.

Als Kältemittel können unterschiedliche, marktübliche Kältemittel eingesetzt werden, wie beispielsweise Kältemittel mit der Bezeichnung R134a, R1234yf etc. Daneben besteht auch die Möglichkeit, ein Kältemittel mit zum Teil überkritischer Betriebsweise, insbesondere Kohlendioxid (CO₂) einzusetzen. In diesem Fall erfolgt in der überkritischen Betriebsweise im Kondensator keine Kondensation. Die Wärmeabgabe erfolgt im gasförmigen Zustand im überkritischen Bereich. Hierbei wird die bisher als Kondensator bezeichnete Komponente Gaskühler genannt. Der Einfachheit halber wird nachfolgend jedoch allgemein von Kondensator gesprochen, ohne dass damit ein Ausschluss derartiger gasförmiger Kältemittel mit solcher Betriebsweise verbunden wäre.

Ein Nachteil bekannter Anlagen liegt darin, dass die Heizleistung mit sinkender Außentemperatur abfällt, während der Bedarf an elektrischer Energie zum Betrieb der Anlage steigt. Bei besonders tiefen Außen- oder Umgebungstemperaturen ist dann die Heizleistung dieser Anlagen nicht mehr ausreichend, um den Fahrgastraum in gewünschter Weise zu beheizen, weswegen für diese Fälle typischerweise ein zusätzlicher elektrischer Heizer, meist Zusatzheizer genannt, verbaut wird. Durch den Betrieb des elektrischen Zusatzheizers wird jedoch die Reichweite eines Hybridfahrzeuges oder Elektrofahrzeuges im elektrischen Betrieb reduziert.

Ausgehend hiervon liegt der Erfindung die Aufgabe zugrunde, eine vorteilhafte Wärmepumpenanlage für ein Fahrzeug sowie ein Verfahren zum Betrieb einer entsprechenden Wärmepumpenanlage anzugeben.

Die auf die Wärmepumpenanlage bezogene Aufgabe wird erfindungsgemäß gelöst durch eine Wärmepumpenanlage mit den Merkmalen des Anspruchs 1. Bevorzugte Weiterbildungen sind in den rückbezogenen Ansprüchen enthalten.

Die Wärmepumpenanlage ist für die Klimatisierung eines Fahrzeuges und insbesondere eines Hybridfahrzeuges oder eines Elektrofahrzeuges ausgelegt und wird in einem Heizbetrieb zur Erwärmung des Fahrgastraums genutzt. Grundsätzlich ist sie auch zur Kühlung des Fahrgastraums nutzbar. Die Wärmepumpenanlage umfasst einen Kühlkreislauf sowie einen Kältekreislauf mit einem Kondensator sowie mit zumindest einem Basis-Verdampfer. Der Kühlkreislauf und der Kältekreislauf sind mittels des Kondensators koppelbar und in einem bestimmten Heizbetriebs-Modus auch derart gekoppelt, dass Wärme aus dem Kältekreislauf in den Kühlkreislauf übertragen wird. Gleichzeitig sind in diesem speziellen Heizbetrieb-Modus der Kühlkreislauf und der Kältekreislauf zwecks Wärmeübertrag in den Kältekreislauf zusätzlich mittels eines Hilfs-Verdampfers gekoppelt. Zur letztendlichen Einkoppelung von Wärme in den Fahrgastraum ist zweckdienlicherweise zudem ein Heiz-Wärmetauscher in den Kühlkreislauf eingebunden, so dass Wärme aus dem Kältekreislauf über den Kondensator in den Kühlkreislauf und weiter über den Heiz-Wärmetauscher in den Fahrgastraum eingekoppelt wird:

Diese Ausgestaltung mit dem speziellen Heizbetrieb-Modus dient für eine Beheizung des Fahrgastinnenraums bei extrem tiefen Außentemperaturen kleiner 0°C und insbesondere im Bereich von kleiner - 10°C wenn zudem auch noch keine Abwärme im Fahrzeug vorliegt. Grundsätzlich besteht bei einer Wärmepumpe das Problem, dass mit sinkender Außentemperatur das Verdampfungsdruckniveau immer tiefer der Außentemperatur angepasst werden muss. Das vom Verdichter des Kältekreislaufs zu verdichtende, gasförmige Kältemittel weist daher mit sinkenden Außentemperaturen ein zunehmend geringeres Druckniveau auf. Mit zunehmend geringerem Druck sinkt jedoch auch der umgewälzte Massenstrom des Kältemittels sowie weiterhin die Verdichterleistung und damit die erzielbare Heizleistung.

Aufgrund der Anordnung des Hilfs-Verdampfers wird im Vorlauf vor dem Verdichter zusätzlich Wärme eingebracht, so dass sich das Druckniveau des Kältemittels erhöht, wodurch sich die über den Verdichter eingebrachte Leistung und der umgewälzte Massenstrom erhöht, so dass letztendlich eine höhere Wärmeausbeute erzielt wird. Hierzu wird insbesondere die Drehzahl des Verdichters erhöht. Der Verdichter wird daher bei dieser Wärmepumpen-Schaltung im speziellen Heizbetriebs-Modus quasi als ein indirekter elektrischer Zusatzheizer eingesetzt. Der besondere Vorteil ist hierbei insbesondere darin zu sehen, dass auf einen herkömmlichen elektrischen Zusatzheizer verzichtet werden kann bzw. dass dieser für eine geringere Leistung ausgelegt werden kann.

Gemäß diesem Betriebsmodus wird also allgemein zumindest ein Teilmassenstrom des Kältemittels im Kältekreislauf durch den Hilfs-Verdampfer geführt, so dass Wärme aus dem Kühlkreislauf in den Kältekreislauf übertragen wird. Anschließend wird der Teilmassenstrom dem Verdichter zugeführt. Der Teilmassenstrom wird dabei vorzugsweise vor dem Verdichter zunächst mit einem zweiten Teilmassenstrom zusammengeführt, der zur Nutzung von Wärme aus einer Wärmequelle über ein oder mehrere Basis-Verdampfer, beispielsweise ein Umgebungs-Wärmetauscher oder ein Wärmetauscher in einer Hochvoltspeicherbatterie, geführt ist. Nach dem Verdichter wird der Gesamt-Massestrom des Kältemittels zum Kondensator geführt und am Kondensator wird Wärme aus dem Kältekreislauf wieder in den Kühlkreislauf übertragen.

Das Kühlmittel im Kühlkreislauf seinerseits ist nach dem Kondensator durch den Heiz-Wärmetauscher zur Erwärmung des Fahrgastraums geführt und wird anschließend durch den Hilfs-Verdampfer geleitet, bevor dieses wieder zum Kondensator gelangt. Dem Kühlmittel im Kühlkreislauf wird also nach dem Heiz-Wärmetauscher Wärme entzogen und vor dem Heiz-Wärmetauscher wird dem Kühlmittel Wärme zugeführt.

Der Wärmeentzug aus dem Kühlmittel im Hilfs-Verdampfer hat den positiven Effekt, dass die Kühlmittelvorlauftemperatur am Kondensator, also die Temperatur des Kühlmittels am Eingang des Kondensators, abgesenkt wird, so dass an diesem aufgrund einer höheren Temperaturdifferenz zwischen Kühlmittel und Kältemittel eine größere Wärmemenge in das Kühlmittel eingekoppelt werden kann. Dies führt wieder zu einem höheren Wärmeübertrag am Hilfs-Verdampfer in das Kältemittel, wodurch sich die gewünschte Anhebung des Verdampfungsdruckes ergibt. Die vom Verdichter zu leistende Arbeit wird dadurch - bei konstantem Kältemittelmassenstrom - weiter erhöht. Die durch die zusätzliche Arbeit in das Kältemittel eingekoppelte zusätzliche Wärme steht dann wiederum am Kondensator zur Verfügung und kann somit zur Beheizung des Fahrgastraums genutzt werden. Die vom Verdichter geleistete Arbeit lässt sich im Falle eines elektrisch angetriebenen Kompressors mit drehzahlabhängigem Fördervolumen zudem weiter erhöhen, indem die Drehzahl erhöht wird.

Ein weiterer Vorteil dieses Heizbetriebsmodus ist - bei Verwendung eines Umgebungs-Wärmetauschers als Basis-Verdampfer - in der Verringerung der Vereisungsgefahr zu sehen. Da nämlich bei zugeschaltetem Kältekreislauf-Hilfszweig zumindest ein Teil des Kältemittels nicht mehr durch den Umgebungs-Wärmetauscher geführt ist, wird der Basis-Verdampfer weniger stark abgekühlt, wodurch die Gefahr der Vereisung reduziert wird.

Mit einem solchen Betriebskonzept lässt sich die Heizleistung zur Beheizung des Fahrgastraums bei niedrigen Umgebungstemperaturen erhöhen. Da dem Kältemittel sowohl Wärme vom Kühlmittel entzogen als auch zugeführt wird, verschlechtert sich zwar der Wirkungsgrad der Wärmepumpe auf Kosten eines höheren elektrischen Energieeintrags über den Verdichter. Dies ist jedoch in diesem Betriebszustand bei extrem kalten Temperaturen akzeptabel, um insgesamt einen akzeptablen Wärmeeintrag in den Fahrgastinnenraum zu erzielen, ohne dass ein (Hochvolt-) Zusatzheizer erforderlich ist. Dementsprechend ist vorzugsweise auf einen elektrischen Zusatzheizer verzichtet oder aber anstelle eines Hochvolt-Zusatzheizers ist ein Niedervolt-Zusatzheizer eingesetzt. Dabei sind die Begriffe Hochvolt und Niedervolt im Zusammenhang mit der typischen Bordnetz-Versorgung und der BordnetzSpannung bei Fahrzeugen zu sehen, weswegen im Automobilbereich als Hochvoltbereich ein Bereich größer gleich 60 V und als Niedervoltbereich ein Spannungsbereich kleiner 60 V angesehen wird. Der Einsatz von Hochvolt-Zusatzheizern ist mit einem nicht unerheblichen gerätetechnischen Aufwand verbunden, der eingespart ist. Herkömmliche Hochvolt-Durchlauferhitzer sind für eine elektrische Leistung von mehreren kW beispielsweise von typischerweise 5,5 kW ausgebildet. Auf diese rein elektrische Heizleistung wird daher vorzugsweise verzichtet. Alternativ werden Niedervolt-Zusatzheizer, beispielsweise sogenannte PTC-Heizer eingesetzt, deren Heizleistung typischerweise bei lediglich 1 bis 2 kW liegt.

Weiter ist die Wärmepumpenanlage derart ausgestaltet, dass der Kältekreislauf einen Kältekreislauf-Basiszweig aufweist, in dem ein oder mehrere Basis-Verdampfer eingebunden ist sowie einen zuschaltbaren Hilfszweig, in den der Hilfs-Verdampfer eingebunden ist. Die eigentliche Wärmeaufnahme aus einer Wärmequelle erfolgt über den Basis-Verdampfer im Basiszweig. Der Hilfszweig und der Hilfs-Verdampfer dienen im Wesentlichen lediglich zur Erhöhung der Kältemittel-Temperatur und damit des Kältemittel-Druckniveaus im Vorfeld des Verdichters.

Der Basis-Verdampfer ist zweckdienlicherweise als ein Umgebungs-Wärmetauscher ausgebildet, über den also Wärme aus der Umgebung, insbesondere aus der Umgebungsluft aufgenommen werden kann. Der Umgebungs-Wärmetauscher kann grundsätzlich parallel in anderen Betriebsmodi auch zur Abgabe von Wärme eingesetzt werden.

Alternativ oder ergänzend zu einem derartigen Umgebungs-Wärmetauscher als Basis-Verdampfer werden zweckdienlicherweise weitere interne Wärmequellen des Kraftfahrzeugs über weitere Basis-Verdampfer ausgenutzt. Beispielsweise wird Abwärme aus einem Verbrennungsmotor oder Abwärme von elektrischen Komponenten wie beispielsweise von einer Batterie, von einem elektrischen Fahrmotor oder von der Hochleistungselektronik ausgenutzt und in den Kältekreislauf eingebracht. Hierbei können zur Ausnutzung möglichst vieler Wärmequellen mehrere Basis-Verdampfer einzelnen oder in beliebigen Kombinationen parallel betrieben werden.

Dem Basis-Verdampfer ist im Kältekreislauf-Basiszweig vorzugsweise ein Basis-Expansionsorgan vorgeschaltet und insbesondere ist zwischen dem Basis-Expansionsorgan und dem Basis-Verdampfer vorzugsweise keinerlei Verzweigung ausgebildet, so dass der gesamte Kühlmittelmassenstrom, der durch das Basis-Expansionsorgan geführt ist, nachfolgend durch den Basis-Verdampfer hindurchtritt.

Der Hilfs-Verdampfer wird vorzugsweise zum Kältekreislauf-Basiszweig hinzugeschaltet. Alternativ wird er anstelle des Kältekreislauf-Basiszweiges betrieben. Dem Hilfs-Verdampfer ist zweckdienlicherweise ein Hilfs-Expansionsorgan vorgeschaltet, so dass sowohl im Kältekreislauf-Basiszweig als auch im Kältekreislauf-Hilfszweig jeweils ein dem jeweiligen Verdampfer zugeordnetes Expansionsorgan gegeben ist, wodurch sich die beiden Kältekreislaufzweige unter anderem problemlos unabhängig voneinander betreiben lassen.

Zweckdienlicherweise ist der Kältekreislauf-Hilfszweig mittels zumindest eines steuerbaren Stellelements, insbesondere mittels eines steuerbaren Ventils, zuschaltbar. Das bedeutet, dass einige Zweige des Kältekreislaufs stets aktiv sind, wenn der Kältekreislauf aktiv ist, während andere Zweige, also insbesondere der Kältekreislauf-Basiszweig und der Kältekreislauf-Hilfszweig, je nach Betriebssituation zugeschaltet oder abgeschaltet werden.

In bevorzugter Ausgestaltung ist zumindest ein Expansionsorgan als sperrbares Expansionsorgan ausgebildet und wird als steuerbares Stellelement genutzt. Dabei ist insbesondere das Hilfs-Expansionsorgan im Kältekreislauf-Hilfszweig als steuerbares Stellelement vorgesehen. Die Zuschaltung des Hilfszweiges erfolgt daher über das Hilfs- Expansionsorgan. Im einfachsten Fall ist der Kältekreislauf-Basiszweig im Heizbetrieb stets aktiviert und bei Bedarf wird der Kältekreislauf-Hilfszweig hinzugeschaltet, indem das Hilfs-Expansionsorgan im Kältekreislauf-Hilfszweig entsperrt oder geöffnet wird.

Vorzugsweise ist der Kältemittelmassenstrom durch den Kältekreislauf-Hilfszweig beispielsweise durch ein steuerbares Ventil steuer- oder regelbar. Infolgedessen wird der Kältemittelmassenstrom durch den Hilfs-Verdampfer variabel eingestellt, wodurch die Stärke der Koppelung zwischen Kältekreislauf und Kühlkreislauf am Hilfs-Verdampfer im Kältekreislauf einstellbar ist.

Die Umwälzung des Kältemittels erfolgt mit Hilfe eines Verdichters, wobei in bevorzugter Ausgestaltung ein gemeinsamer Verdichter sowohl für den Basisals auch für den Hilfskreislauf angeordnet ist. Im Hilfs-Heizbetriebsmodus ist daher der über den Verdichter geförderte Kältemittel-Massenstrom größer als der durch den Basis-Verdampfer geleitete Kältemittel-Massenstrom.

In vorteilhafter Weiterbildung ist der Kältekreislauf-Hilfszweig parallel zum Kältekreislauf-Basiszweig zuschaltbar, wobei der gesamte Kältemittelmassenstrom im Kältekreislauf bevorzugt auf den Kältekreislauf-Basiszweig einerseits und den Kältekreislauf-Hilfszweig aufgeteilt wird und die Aufteilung der beiden Teilmasseströme regelbar ist.

Zur Steigerung der Heizleistung bei kalten Temperaturen der Kältekreislauf-Hilfszweig zugeschaltet. Die Steuerung der Heizleistung erfolgt dann vorzugsweise über die Regelung der Drehzahl des Verdichters. Zur Erhöhung der Heizleistung wird die Drehzahl erhöht. Der hierdurch zusätzlich geförderte Massenstrom wird dabei vorzugsweise vollständig über den Hilfs-Verdampfer geleitet. Dies erfolgt zweckdienlicherweise durch eine geeignete Ansteuerung des Hilfs-Expansionsventil, das also entsprechend weiter geöffnet wird.

Die Steuerung der Wärmepumpenanlage erfolgt mit Hilfe einer Steuerungseinheit oder eines Steuergeräts flexibel und in Abhängigkeit der aktuellen Betriebssituation und insbesondere in Abhängigkeit der Umgebungstemperatur. Die Steuerungseinheit ist dabei derart eingerichtet ist, dass diese bei Bedarf zwischen zwei Heizbetriebsmodi wechselt, wobei in einem Basis-Heizbetriebsmodus nur der Kältekreislauf-Basiszweig betrieben wird und wobei in einem Hilfs-Heizbetriebsmodus der Kältekreislauf-Hilfszweig zumindest zugeschalten wird. Dementsprechend wird die Wärmepumpenanlage im Basis-Heizbetriebsmodus nach dem klassischen Betriebskonzept für Wärmepumpenanlagen in Fahrzeugen betrieben, während mit dem Hilfs-Heizbetriebsmodus der hier vorgestellte spezielle Heiz-Betriebsmodus ausgeführt wird.

Die auf das Verfahren gerichtete Aufgabe wird erfindungsgemäß gelöst durch ein Verfahren mit den Merkmalen des Anspruchs 11. Die im Hinblick auf die Wärmepumpenanlage angeführten Vorteile und bevorzugten Ausgestaltungen sind sinngemäß auch auf das Verfahren übertragbar und umgekehrt. Bevorzugte Weiterbildungen des Verfahrens sind in den Unteransprüchen angegeben.

Ausführungsbeispiele der Erfindung werden nachfolgend anhand einer schematischen Zeichnung näher erläutert. Darin zeigen:

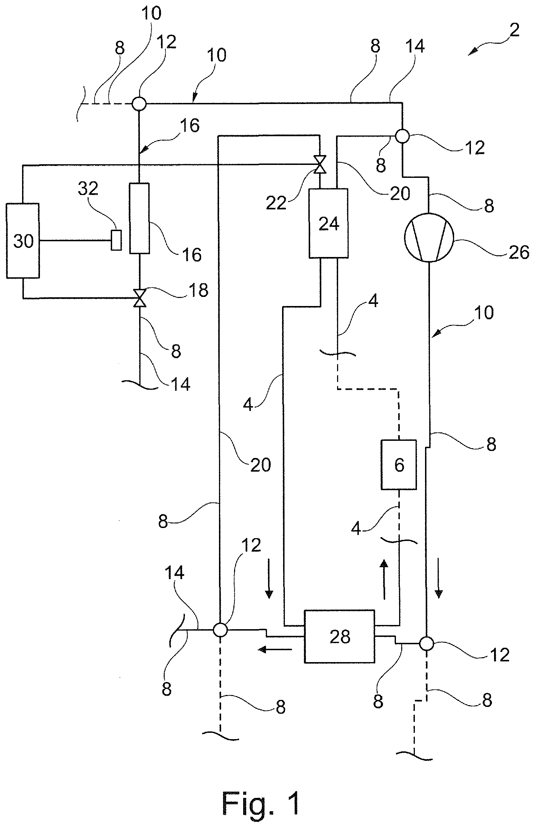

- FIG 1: in einer Blockschaltbilddarstellung eine Wärmepumpenanlage.

Die nachfolgend exemplarisch beschriebene und in FIG 1 dargestellte Wärmepumpenanlage 2 ist in nicht näher gezeigter Weise in einem Elektro- oder Hybridfahrzeug installiert und umfasst einen Kühlkreislauf 4, beispielsweise ein Hochtemperatur-Kühlkreislauf zur Kühlung eines nicht mit abgebildeten Verbrennungsmotors, in welchem ein Heiz-Wärmetauscher, kurz Wärmetauscher 6, zur bedarfsweisen Erwärmung des Fahrgastraums eingebunden ist. Der Kühlkreislauf 4 ist hierbei nicht vollständig dargestellt, weswegen ein Abschnitt desselbigen durch eine gestrichelte Linie repräsentiert ist.

Weiter umfasst die Wärmepumpenanlage 2 einen Kältekreislauf 8, der durch mehrere Kältekreislauf-Zweige 10 gebildet wird, die über Verzweigungen 12 miteinander verbunden sind. Nicht näher ausgeführte Kältekreislauf-Zweige 10 sind wiederum durch gestrichelte Linien angedeutet, wobei diese für das hier vorgestellte Betriebskonzept der Wärmepumpenanlage 2 nicht weiter relevant sind.

Teil des Kältekreislaufs 8 sind insbesondere ein Kältekreislauf-Basiszweig 14 mit einem vorzugsweise als Umgebungs-Wärmetauscher 16 ausgebildeten Basis-Verdampfer zur Aufnahme von Wärme aus der Umgebung des Hybridfahrzeuges in den Kältekreislauf 8 und mit einem Basis-Expansionsventil 18, welches dem Basis-Verdampfer 16 vorgeschaltet ist. Weiter weist der Kältekreislauf 8 einen Kältekreis-Hilfszweig 20 auf, in dem ein Hilfs-Expansionsventil 22 und ein dem Hilfs-Expansionsventil 22 nachgeschalteter Hilfs-Verdampfer 24 eingebunden sind. Zudem sind ein Verdichter 26, genauer ein elektrisch betriebener Kompressor, und ein Kondensator 28 im Kältekreislauf 8 enthalten.

Über den Hilfs-Verdampfer 24 einerseits und den Kondensator 28 andererseits sind der Kältekreislauf 8 und der Kühlkreislauf 4 zum Zwecke eines Wärmeaustausches koppelbar, wobei die Koppelung oder Entkoppelung je nach Bedarf und Betriebssituation durch eine Steuerungseinheit 30 vorgenommen wird. Hierzu ist in die Steuerungseinheit 30 ein Speicher integriert, in dem für verschiedene Szenarien verschiedene Vorgaben hinterlegt sind. Alternativ oder ergänzend ist ein Steueralgorithmus hinterlegt. Zudem ist die Steuerungseinheit 30 signaltechnisch mit zumindest einem Sensor 32 verbunden, mit welchem die Bedingungen in der Umgebung des Hybridfahrzeuges, also insbesondere die Umgebungstemperatur, sensorisch überwacht werden.

Für den Heizbetrieb der Wärmepumpenanlage 2 sind im Wesentlichen zwei Heizbetriebsmodi vorgesehen, die je nach Betriebssituation und insbesondere je nach Umgebungsbedingungen mittels der Steuerungseinheit 30 umgesetzt werden. In einem Basis-Heizbetriebsmodus wird die Wärmepumpenanlage 2 gemäß dem klassischen Betriebskonzept betrieben, wobei der Umgebung mittels des Basis-Verdampfers 16 Wärme entzogen und in das Kältemittel im Kältekreislauf 8 eingekoppelt wird. Das Kältemittel wird dann dem Verdichter 26 zugeführt und dort verdichtet. Nachfolgend gelangt das Kältemittel zum Kondensator 28, an dem Wärme aus dem Kältemittel an das Kühlmittel im Kühlkreislauf 4 übertragen wird. Das Kältemittel gelangt über eine Verzweigung 12 zurück in den Kältekreislauf-Basiszweig 14 und dementsprechend zum Basis-Expansionsventil 18 und schließlich zurück zum Basis-Verdampfer 16. Das Kühlmittel ist ausgehend vom Kondensator 28 zum Wärmetauscher 6 geführt, wo zumindest ein Teil der aus dem Kältekreislauf 8 am Kondensator 28 aufgenommenen Wärme an den Fahrgastraum abgegeben wird.

Im Falle von sehr geringen Temperaturen und für den Fall, dass über den Basis-Verdampfer noch nicht genügend Wärme in den Kältekreislauf eingebracht werden kann, so dass nach dem Basis-Verdampfer 16 nur ein extrem niedriges Verdampfungsdruck-Niveau des Kältemittels besteht, wird über die Steuerungseinheit 30 der Hilfs-Heizbetriebmodus durch die zumindest teilweise Zuschaltung des Kältekreislauf-Hilfszweigs 20 aktiviert.

Dazu wird das im reinen Basis-Heizbetriebsmodus gesperrte Hilfs-Expansionsventil 22 durch die Steuerungseinheit 30 zumindest teilweise geöffnet, wodurch vom Massenstrom des Kältemittels, der durch den Kondensator 28 geführt ist, in der nachgeschalteten Verzweigung 12 ein Teilmassenstrom abgespalten wird und nachfolgend durch den Kältekreislauf-Hilfszweig 20 geführt ist.

Hierdurch ist zum einen der Massenstrom oder der Teilmassenstrom durch den Kältekreislauf-Basiszweig 14 im Vergleich zum Basis-Heizbetriebsmodus zumindest reduziert, wodurch der Körper des Basis-Verdampfers 16 weniger stark gekühlt wird, was das Vereisungsrisiko deutlich reduziert. Über das Basis-Expansionventil 18 einerseits und das Hilfs-Expansionsventil 22 andererseits sind die Teilmassenströme des Kältemittels durch den Kältekreislauf-Basiszweig 14 bzw. den Kältekreislauf-Hilfszweig 20 regulierbar oder einstellbar, wobei jeder der beiden Zweige 10, 20 durch Sperrung des entsprechenden Expansionsventils 18, 22 auch deaktiviert und somit vollständig abgeschalten werden kann.

Der Teilmassenstrom durch den Kältekreislauf-Hilfszweig 20 gelangt durch das Hilfs-Expansionsventil 22 zum Hilfs-Verdampfer 24 und nimmt dort Wärme aus dem Kühlkreislauf 4 auf. Nachfolgend werden der Teilmassenstrom durch den Kältekreislauf-Hilfszweig 20 und der Teilmassenstrom durch den Kältekreislauf-Basiszweig 14 in der dem Verdichter 26 vorgelagerten Verzweigung 12 zusammengeführt und nachfolgend werden beide Teilmassenströme im Verdichter 26 verdichtet. Vom Verdichter 26 gelangt das Kältemittel dann wieder zum Kondensator 28, in dem Wärme vom Kältemittel des Kältekreislaufs 8 auf das Kühlmittel des Kühlmittelkreislaufs 4 übertragen wird.

In dem Strömungsteilpfad zwischen dem Hilfs-Verdampfer 24 und der Verzweigung 12 ist vorzugsweise weiterhin ein Druckregelventil angeordnet, um das Druckniveau in den beiden Teilkreisläufen 14,20 aneinander anpassen zu können.

Der Wärmeentzug aus dem Kühlmittel im Hilfs-Verdampfer 24 hat den entscheidenden positiven Effekt, dass ab dem Moment des Öffnens des Hilfs-Expansionsventils 22 die vom Verdichter 26 zu verdichtende Verdichterarbeit erhöht ist und zusätzliche Wärme am Kondensator 28 zur Übertragung an den Kühlkreislauf 4 zur Verfügung steht. Dadurch ist der Wärmeeintrag in den Fahrgastraum insgesamt verbessert. Ein weiterer positiver Effekt besteht darin, dass die Temperatur des Kühlmittels am Eingang des Kondensators 28 abgesenkt wird, so dass aufgrund der dann höheren Temperaturdifferenz eine größere Wärmemenge am Kondensator 28 übertragen werden kann.

Grundsätzlich ist infolge des zusätzlichen Wärmeeintrags über den Hilfs-Verdampfer 24 das Druckniveau und damit die Dichte des Kältemittels erhöht, so dass insgesamt der umgewälzte Massenstrom des Kältemittels erhöht wird, was zusätzlich zu einer Verbesserung des Wärmeeintrags in den Fahrgastraums führt.

Der von dem Verdichter umgewälzte Kältemittel-Massenstrom lässt sich allgemein durch die Drehzahl des Verdichters 26 variieren. Bei dem Verdichter 26 handelt es sich üblicherweise um einen drehzahlgeregelten Verdichter, der bei konstanter Drehzahl einen konstanten Volumenstrom fördert. Je geringer die Dichte des Kältemittels ist, desto geringer ist der Massenstrom. Dies kann daher mit einer Erhöhung der Drehzahl ausgeglichen werden. Allerdings wird bei heute eingesetzten Verdichtern 26 bei tiefen Temperaturen üblicherweise die Höchstdrehzahl und damit die Belastungsgrenze erreicht. Durch die hier beschriebenen Maßnahmen wird diese Belastungsgrenze erst später erreicht.

Im Vergleich zu einer herkömmlichen Anlage ist zudem bei niedrigen Temperaturen eine Erhöhung der Drehzahl des Verdichters 26 ermöglicht, da aufgrund der Abzweigung des Teil-Massenstroms über den Hilfszweig 20 die Vereisungsgefahr am Basis-Verdampfer 16 (Umgebungswärmetauscher) verringert ist.

Die Erfindung ist nicht auf das vorstehend beschriebene Ausführungsbeispiel beschränkt.

### Bezugszeichenliste

- 2: Wärmepumpenanlage
- 4: Kühlkreislauf
- 6: Wärmetauscher
- 8: Kältekreislauf
- 10: Kältekreislauf-Zweig
- 12: Verzweigung
- 14: Kältekreislauf-Basiszweig
- 16: Basis-Verdampfer
- 18: Basis-Expansionsventil
- 20: Kältekreislauf-Hilfszweig
- 22: Hilfs-Expansionsventil
- 24: Hilfs-Verdampfer
- 26: Verdichter
- 28: Kondensator
- 30: Steuerungseinheit
- 32: Sensor

## Patentansprüche

1. Wärmepumpenanlage (2) zur Klimatisierung eines Fahrzeuges, insbesondere eines Elektro- oder Hybridfahrzeuges, mit einem Heizbetrieb zur Erwärmung eines Fahrgastraumes umfassend einen Kühlkreislauf (4) und einen Kältekreislauf (8) mit einem Kondensator (28) sowie mit einem Basis-Verdampfer (16), wobei im Heizbetrieb der Kühlkreislauf (4) und der Kältekreislauf (8) mittels des Kondensators (28) zur Wärmeübertragung vom Kältekreislauf (8) in den Kühlkreislauf (4) gekoppelt sind,
wobei der Kühlkreislauf (4) und der Kältekreislauf (8) zusätzlich mittels eines Hilfs-Verdampfers (24) im Kältekreislauf (8) zur Wärmeübertragung vom Kühlkreislauf (4) in den Kältekreislauf (8) gekoppelt sind, **dadurch gekennzeichnet, dass**
der Kältekreislauf (8) einen Kältekreislauf-Basiszweig (14) sowie einen zuschaltbaren Kältekreislauf-Hilfszweig (20) aufweist, wobei im Kältekreislauf-Basiszweig (14) der Basis-Verdampfer (16) und im Kältekreislauf-Hilfszweig (20) der Hilfs-Verdampfer (24) eingebunden ist und wobei diese eine Steuerungseinheit (30) umfasst, die bei Bedarf zwischen zwei Heizbetriebsmodi wechselt, wobei in einem Basis-Heizbetriebsmodus nur der Kältekreislauf-Basiszweig (14) betrieben wird und wobei in einem Hilfs-Heizbetriebsmodus der Kältekreislauf-Hilfszweig (20) zumindest zugeschaltet ist.

2. Wärmepumpenanlage (2) nach Anspruch 1,
**dadurch gekennzeichnet,**
**dass** der Basis-Verdampfer (16) ein Umgebungs-Wärmetauscher ist.

3. Wärmepumpenanlage (2) nach Anspruch 1 oder 2,
**dadurch gekennzeichnet,**
**dass** die Steuerungseinheit (30) den Kältekreislauf-Hilfszweig (20) für den Hilfs-Heizbetriebsmodus zumindest zugeschaltet, wenn die Außentemperatur unter 0°C und insbesondere unter -10°C liegt.

4. Wärmepumpenanlage (2) nach einem der Ansprüche 1 bis 3,
**dadurch gekennzeichnet,**
**dass** dem Basis-Verdampfer (16) im Kältekreislauf-Basiszweig (14) ein Basis-Expansionsorgan (18) vorgeschaltet ist.

5. Wärmepumpenanlage (2) nach einem der Ansprüche 1 bis 4,
**dadurch gekennzeichnet,**
**dass** dem Verdampfer (24) im Kältekreislauf-Hilfszweig (20) ein Hilfs-Expansionsorgan (22) vorgeschaltet ist.

6. Wärmepumpenanlage (2) nach einem der Ansprüche 1 bis 5,
**dadurch gekennzeichnet,**
**dass** der Kältekreislauf-Hilfszweig (20) mittels zumindest eines steuerbaren Stellelements (22) zuschaltbar ist.

7. Wärmepumpenanlage (2) nach Anspruch 6,
**dadurch gekennzeichnet,**
**dass** das zumindest eine steuerbare Stellelement (22) durch das Hilfs-Expansionsorgan (22) im Kältekreislauf-Hilfszweig (20) gegeben ist.

8. Wärmepumpenanlage (2) nach einem der Ansprüche 1 bis 7,
**dadurch gekennzeichnet,**
**dass** ein Kältemittelmassenstrom durch den Kältekreislauf-Hilfszweig (20) steuerbar ist.

9. Wärmepumpenanlage (2) nach einem der Ansprüche 1 bis 8,
**dadurch gekennzeichnet,**
**dass** der Kältekreislauf-Hilfszweig (20) parallel zum Kältekreislauf-Basiszweig (14) zuschaltbar ist.

10. Wärmepumpenanlage (2) nach einem der Ansprüche 1 bis 9,
**dadurch gekennzeichnet,**
**dass** auf einen elektrischen Zusatzheizer verzichtet ist.

11. Verfahren zum Betrieb einer Wärmepumpenanlage (2), insbesondere einer Wärmepumpenanlage (2) nach einem der vorherigen Ansprüche, umfassend einen Kühlkreislauf (4) und einen Kältekreislauf (8) mit einem Kondensator (28) sowie mit einem Basis-Verdampfer (16), wobei der Kühlkreislauf (4) und der Kältekreislauf (8) in einem Heizbetriebsmodus mittels des Kondensators (28) zur Wärmeübertragung vom Kältekreislauf (8) in den Kühlkreislauf (4) gekoppelt sind,
wobei
zugleich mittels eines Hilfs-Verdampfers (24) Wärme aus dem Kühlkreislauf (4) in den Kältekreislauf (8) übertragen wird, **dadurch gekennzeichnet, dass**
der Kältekreislauf (8) einen Kältekreislauf-Basiszweig (14) sowie einen zuschaltbaren Kältekreislauf-Hilfszweig (20) aufweist, wobei im Kältekreislauf-Basiszweig (14) der Basis-Verdampfer (16) und im Kältekreislauf-Hilfszweig (20) der Hilfs-Verdampfer (24) eingebunden ist, und dass in einem Basis-Heizbetriebsmodus nur der Kältekreislauf-Basiszweig (14) betrieben ist und wobei in einem Hilfs-Heizbetriebsmodus der Kältekreislauf-Hilfszweig (20) zumindest zugeschaltet ist.

12. Verfahren nach Anspruch 11,
**dadurch gekennzeichnet, dass**,
ein Verdichter (26) angeordnet ist, und dass im Hilfs-Heizbetriebsmodus ein Massenstrom des Kältemittels durch den Verdichter (26) höher ist als durch den Basis-Verdampfer (16).

13. Verfahren nach Anspruch 12,
**dadurch gekennzeichnet,**
**dass** ein Kältemittelmassenstrom durch den Kältekreislauf-Hilfszweig (20) geregelt wird.

14. Verfahren nach einem der Ansprüche 11 bis 13,
**dadurch gekennzeichnet, dass**,
über die Regelung einer Drehzahl des Verdichters (26) eine Heizleistung eingestellt wird.

## Claims

1. A heat pump system (2) for air-conditioning a vehicle, especially an electric or hybrid vehicle, with a heating operation for heating a passenger compartment, comprising a cooling circuit (4) and a refrigeration circuit (8) with a condenser (28) and also with a basic evaporator (16), wherein in the heating operation the cooling circuit (4) and the refrigeration circuit (8) are coupled by means of the condenser (28) for transferring heat from the refrigeration circuit (8) into the cooling circuit (4), wherein the cooling circuit (4) and the refrigeration circuit (8) are additionally coupled by means of an auxiliary evaporator (24) in the refrigeration circuit (8) for transferring heat from the cooling circuit (4) into the refrigeration circuit (8), **characterised in that** the refrigeration circuit (8) has a basic refrigeration circuit branch (14) and also an auxiliary refrigeration circuit branch (20) which can be connected into the system, with the basic evaporator (16) being integrated in the basic refrigeration circuit branch (14) and the auxiliary evaporator (24) being integrated in the auxiliary refrigeration circuit branch (20), and wherein this includes a control unit (30) which if required changes between two heating operation modes, with only the basic refrigeration circuit branch (14) being operated in a basic heating operation mode and with the auxiliary refrigeration circuit branch (20) being at least connected into the system in an auxiliary heating operation mode.

2. A heat pump system (2) according to Claim 1,
**characterised in that**
the basic evaporator (16) is an ambient heat exchanger.

3. A heat pump system (2) according to Claim 1 or Claim 2,
**characterised in that**
the control unit (30) at least switches the auxiliary refrigeration circuit branch (20) for the auxiliary heating operation mode into the system if the external temperature is below 0°C and especially below -10°C.

4. A heat pump system (2) according to one of Claims 1 to 3,
**characterised in that**
the basic evaporator (16) in the basic refrigeration circuit branch (14) is preceded by a basic expansion member (18).

5. A heat pump system (2) according to one of Claims 1 to 4,
**characterised in that**
the evaporator (24) in the auxiliary refrigeration circuit branch (20) is preceded by an auxiliary expansion member (22).

6. A heat pump system (2) according to one of Claims 1 to 5,
**characterised in that**
the auxiliary refrigeration circuit branch (20) can be connected into the system by means of at least one controllable control element (22).

7. A heat pump system (2) according to Claim 6,
**characterised in that**
the at least one controllable control element (22) is provided by the auxiliary expansion member (22) in the auxiliary refrigeration circuit branch (20).

8. A heat pump system (2) according to one of Claims 1 to 7,
**characterised in that**
a refrigerant mass flow through the auxiliary refrigeration circuit branch (20) is controllable.

9. A heat pump system (2) according to one of Claims 1 to 8,
**characterised in that**
the auxiliary refrigeration circuit branch (20) can be connected into the system in parallel to the basic refrigeration circuit branch (14).

10. A heat pump system (2) according to one of Claims 1 to 9, **characterised in that**
an electric additional heater is dispensed with.

11. A method for operating a heat pump system (2), especially a heat pump system (2) according to one of the preceding claims, comprising a cooling circuit (4) and a refrigeration circuit (8) with a condenser (28) and also with a basic evaporator (16), wherein the cooling circuit (4) and the refrigeration circuit (8) in a heating operation mode are coupled by means of the condenser (28) for transferring heat from the refrigeration circuit (8) into the cooling circuit (4), wherein at the same time, by means of an auxiliary evaporator (24) heat is transferred from the cooling circuit (4) into the refrigeration circuit (8), **characterised in that** the refrigeration circuit (8) has a basic refrigeration circuit branch (14) and also an auxiliary refrigeration circuit branch (20) which can be connected into the system, with the basic evaporator (16) being integrated in the basic refrigeration circuit branch (14) and the auxiliary evaporator (24) being integrated in the auxiliary refrigeration circuit branch (20), and **in that** only the basic refrigeration circuit branch (14) is operated in a basic heating operation mode and with the auxiliary refrigeration circuit branch (20) being at least connected into the system in an auxiliary heating operation mode.

12. A method according to Claim 11,
**characterised in that**
a compressor (26) is arranged, and **in that** in the auxiliary heating operation mode a mass flow of the refrigerant through the compressor (26) is higher than through the basic evaporator (16).

13. A method according to Claim 12,
**characterised in that**
a refrigerant mass flow through the auxiliary refrigeration circuit branch (20) is regulated.

14. A method according to one of Claims 11 to 13,
**characterised in that**
a heat output is set by means of the regulation of a speed of the compressor (26).

## Revendications

1. Installation de pompe à chaleur (2) permettant de climatiser un véhicule, en particulier un véhicule électrique ou un véhicule hybride comportant un mode de chauffage permettant de chauffer l'habitacle du véhicule, comprenant un circuit de refroidissement (4) et un circuit frigorifique (8) équipé d'un condensateur (28) ainsi que d'un évaporateur de base (16), en mode de chauffage, le circuit de refroidissement (4) et le circuit frigorifique (8) étant couplés au moyen du condensateur (28) pour permettre un transfert de chaleur du circuit frigorifique (8) dans le circuit de refroidissement (4), le circuit de refroidissement (4) et le circuit frigorifique (8) étant en outre couplés au moyen d'un évaporateur auxiliaire (24) monté dans le circuit frigorifique (8) pour permettre un transfert de chaleur du circuit de refroidissement (4) dans le circuit frigorifique (8),
**caractérisée en ce que**
le circuit frigorifique (8) comporte une branche de base (14) ainsi qu'une branche auxiliaire (20) susceptible d'être branchée, l'évaporateur de base (16) étant intégré, dans la branche de base du circuit frigorifique (14), et l'évaporateur auxiliaire (24) étant intégré dans la branche auxiliaire (20) du circuit frigorifique, et il est prévu une unité de commande (30), qui en cas de besoin, permet d'effectuer une commutation entre deux modes de chauffage, dans un mode de chauffage de base, seule la branche de base (14) du circuit frigorifique étant actionnée tandis que dans un mode de chauffage auxiliaire, la branche auxiliaire (20) du circuit frigorifique est au moins branchée.

2. Installation de pompe à chaleur (2) conforme à la revendication 1,
**caractérisée en ce que**
l'évaporateur de base (16) est un échangeur de chaleur avec l'environnement.

3. Installation de pompe à chaleur (2) conforme à la revendication 1 ou 2,
**caractérisée en ce que**
l'unité de commande (30) branche au moins la branche auxiliaire (20) du circuit frigorifique pour le mode de fonctionnement de chauffage auxiliaire lorsque la température externe chute au-dessous de 0° C et en particulier au-dessous de -10°C.

4. Installation de pompe à chaleur (2) conforme à l'une des revendications 1 à 3,
**caractérisée en ce qu'**
un organe de détente de base (18) est branché dans la branche de base (14) du circuit frigorifique en amont de l'évaporateur de base (16).

5. Installation de pompe à chaleur (2) conforme à l'une des revendications 1 à 4,
**caractérisée en ce qu'**
un organe de détente auxiliaire (22) est branché dans la branche auxiliaire (20) du circuit frigorifique, en amont de l'évaporateur de base (24).

6. Installation de pompe à chaleur (2) conforme à l'une des revendications 1 à 5,
**caractérisée en ce que**
la branche auxiliaire (20) du circuit frigorifique peut être branchée au moyen d'au moins un élément de réglage commandable (22).

7. Installation de pompe à chaleur (2) conforme à la revendication 6,
**caractérisée en ce que**
l'élément de réglable commandable (22) est constitué par l'organe de détente auxiliaire (22) monté dans la branche auxiliaire (20) du circuit frigorifique.

8. Installation de pompe à chaleur (2) conforme à l'une des revendications 1 à 7,
**caractérisée en ce qu'**
le débit massique d'agent réfrigérant passant dans la branche auxiliaire (20) du circuit frigorifique peut être commandé.

9. Installation de pompe à chaleur (2) conforme à l'une des revendications 1 à 8,
**caractérisée en ce que**
la branche auxiliaire (20) du circuit frigorifique peut être branchée parallèlement à la branche de base (14) de ce circuit frigorifique.

10. Installation de pompe à chaleur (2) conforme à l'une des revendications 1 à 9,
**caractérisée en ce que**
l'on renonce à un organe de chauffage électrique supplémentaire.

11. Procédé de gestion d'une installation de pompe à chaleur (2), en particulier d'une installation de pompe à chaleur (2) conforme à l'une des revendications précédentes comprenant un circuit de refroidissement (4) et un circuit réfrigérant (8) équipé d'un condensateur (28) ainsi que d'un évaporateur de base (16), le circuit de refroidissement (4) et le circuit réfrigérant (8) étant couplés dans un mode de chauffage au moyen du condensateur (28) pour permettre un transfert de chaleur du circuit frigorifique (8) dans le circuit de refroidissement (4), et, parallèlement, un évaporateur auxiliaire (24) permettant un transfert de chaleur du circuit de refroidissement (4) dans le circuit réfrigérant (8),
**caractérisé en ce que**
le circuit réfrigérant (8) comporte une branche de base (14) ainsi qu'une branche auxiliaire (20) susceptible d'être branchée, l'évaporateur de base (16) étant intégré dans la branche de base (14) du circuit réfrigérant et l'évaporateur auxiliaire (24) étant intégré dans la branche auxiliaire (20) du circuit réfrigérant, et, dans un mode de chauffage de base, seule la branche de base (14) du circuit réfrigérant est actionnée, tandis que dans un mode de chauffage auxiliaire, la branche auxiliaire (20) du circuit réfrigérant est au moins branchée.

12. Procédé conforme à la revendication 11,
**caractérisé en ce qu'**
il est prévu un compresseur (26) et, dans le mode de chauffage auxiliaire, le débit massique d'agent réfrigérant passant dans le compresseur (26) est supérieur au débit massique d'agent de refroidissement passant dans l'évaporateur de base (16).

13. Procédé conforme à la revendication 12,
**caractérisé en ce que**
le débit massique de l'agent réfrigérant passant dans la branche auxiliaire (20) du circuit réfrigérant est réglé.

14. Procédé conforme à l'une des revendications 11 à 13,
**caractérisé en ce que**
la régulation de la vitesse de rotation du compresseur (26) permet de régler la puissance de chauffage.
